# EUROPEAN PATENT APPLICATION

(11) **EP 1 681 229 A2**
(43) Date of publication of application: **19.07.2006**
(21) Application number: 06000525.3
(22) Date of filing: 11.01.2006
(51) Int. Cl.: B62K 11/04

(54) **Motorcycle**

(30) Priority: 12.01.2005 JP 2005005736
(71) Applicant: YAMAHA HATSUDOKI KABUSHIKI KAISHA, Iwata-shi Shizuoka-ken (JP)
(72) Inventor: Shiraishi, Takushiro, Yamaha Hatsudoki K.K., Iwata-shi Shizuoka-ken (JP); Moriyama, Shuji, Yamaha Hatsudoki K.K., Iwata-shi Shizuoka-ken (JP)
(74) Representative: Grünecker, Kinkeldey, Stockmair & Schwanhäusser Anwaltssozietät

(57) **Abstract**

The present invention relates to a motorcycle having a main frame (20) and an engine (50), wherein the main frame (20) is composed of a pair of left-right frame members (22), and wherein an air inlet (60) extends in a space between the frame members (22) and is connected to the engine (50) in a substantially longitudinally extending line.

## Description

The present invention relates to motorcycles, and more specifically, to motorcycles (for example, off-road bike) of which connection between the engine and the air inlet is being considered.

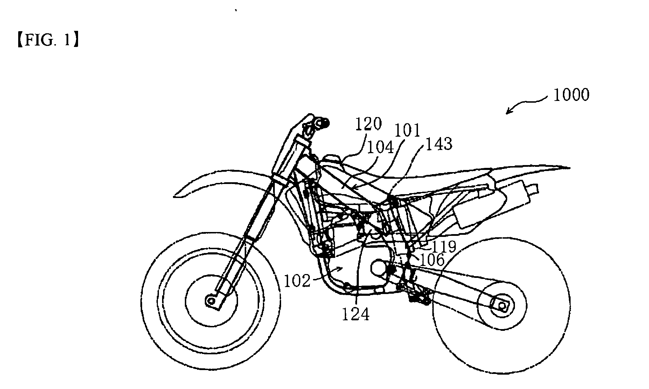

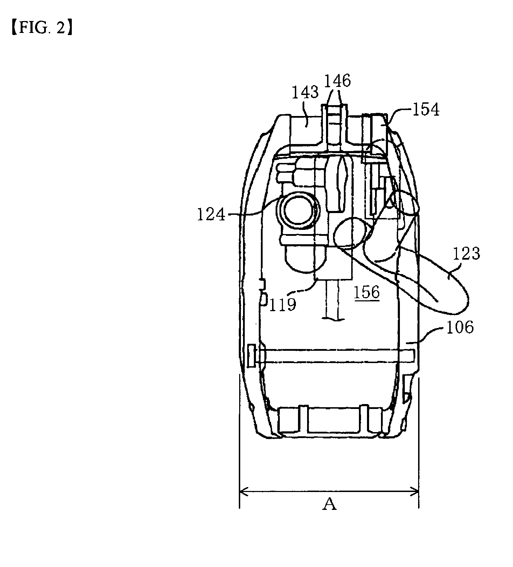

In Japanese laid-open patent publication 2001-278158 there is disclosed a motorcycle frame that is adapted for mounting a four cycle engine by providing an easy layout for the air inlet of the engine and the like. The motorcycle disclosed in the patent reference 1 is illustrated in FIG. 1. FIG. 2 is a drawing illustrating the arrangement of parts in a space below a cross member at the rear portion of the motorcycle illustrated in FIG. 1.

In a vehicle frame 101 of the motorcycle illustrated in FIG. 1, a rear-end portion of a left-right pair of main frames 104 is attached to an upper portion of a left-right pair of pivot plates 106. The upper-end portion of the pivot plates 106, as illustrated in FIG. 2, is an upward extending portion 154 that extends further upward than the rear-end portion of the main frame 104, and a rear portion cross member 143 straddles the space between the left-right upward extending portions 154. The rear portion cross member 143 is provided with a top surface for supporting the rear portion of a fuel tank 120, and is provided with a fork-shaped cushion bracket 146 that protrudes to the rear for supporting the upper portion of the rear cushion 119. Further, a space 156 is provided below the rear portion cross member 143, and a air inlet composed of a carburetor 124 and a cone tube, and an exhaust passage 123 and a rear cushion 119 are provided within the space.

In such motorcycle, the upper-end portion of the left-right pivot plates 106 is extended further upwards than the rear-end portion of the main frame 104, and the space 154 between such upper-end portions is straddled by the rear portion cross member 143. Hence, a space 156 between the pivot plates 106 below the rear portion cross member 143 can be sufficiently provided, and air inlet (124) and rear cushion 119 can be easily provided within the space. As a result, by mounting the four cycle engine 102, even if the position of the air inlet is high, sufficient layout can be made possible. In addition, the space between the left-right main frame 104 in front of the rear portion cross member 143 can be utilized as a space for mounting the fuel tank 120, and the rear portion cross member 143 can also be utilized as a support for the fuel tank 120.

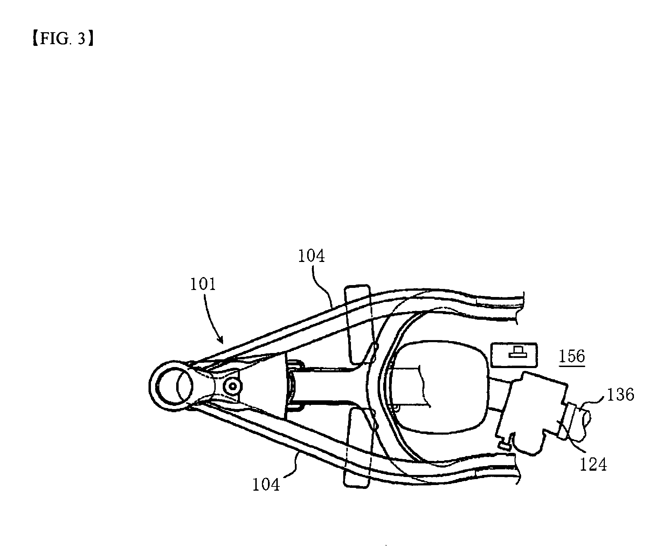

However, according to the motorcycle disclosed in Japanese laid-open patent publication 2001-278158, as illustrated in FIG. 1, since the air inlet (124) of the engine is provided behind the engine 102 and below the attachment part of rear cushion (143), it is required of the shape of a suction port extending from the carburetor 124 to the engine 102 to curve at approximately 90°, and the engine output cannot be easily increased. Further, as illustrated in FIG. 3, even when viewed from above, the air inlet including the cone tube 136, the carburetor 124 and the suction port is in a curve and not a straight line. This is also a factor that renders the difficulty in increasing the engine output. Moreover, as illustrated in FIG. 3, since the air inlet is curved when viewed from above, suction setting for cleaning exhaust gas becomes difficult.

Further, in view of the maneuverability of the vehicle, it is desirable for the width A of the structure illustrated in FIG. 2 to be narrow. However, according to such layout, a certain length is required of the width A due to the air inlet 124, the rear suspension 119 and the exhaust passage 123, and this poses a problem in improving the maneuverability of the vehicle. Alternatively, a complicated pipe shape will be required in order to decrease the width A while maintaining the surface area of the air inlet 124. The width A can be reduced by forming a depression in the exhaust passage (pipe) 123, but this requires an additional step for forming a depression in the pipe and is not desirable. In addition, according to such structure, since the exhaust passage 123 is located near to the suspension 119, the heat of the exhaust gas will have an effect on the suspension.

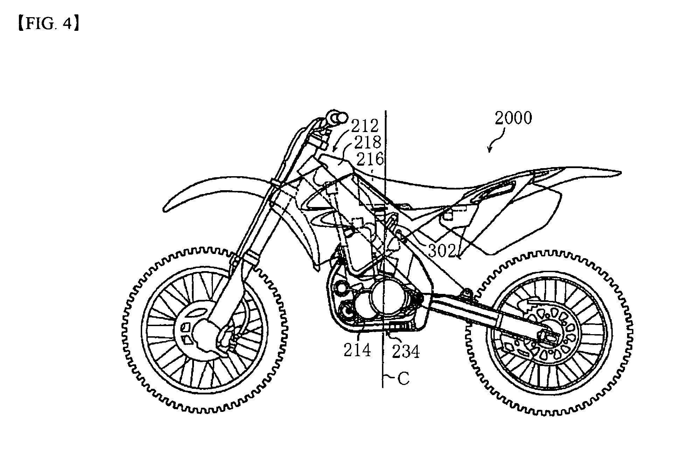

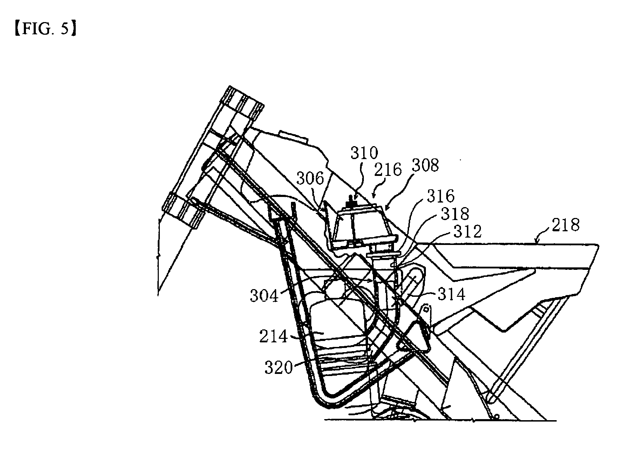

A modified off-road motorbike is disclosed in publication JP2002-513713 (International Publication W099/56997), and such motorbike is illustrated in FIG. 4. The motorbike 2000 illustrated in FIG. 4 includes a modified engine 214, a frame 212 and a fuel tank 218, and an enlargement of the relevant parts is illustrated in FIG. 5.

The engine 214 is a four stroke engine, and a cylinder within the engine is in a state such that a suction assembly 216 and the fluid are connected. The engine 214 includes, as a substitution of a carburetor, an electronic injection valve 302. Accordingly, the engine 214 can be vertically disposed such that it extends upwards from an engine frame 234.

The suction assembly 216 includes a bifurcated housing 304, an air box 306, an air filter 308 and a retainer 310. The air filter 308 prevents dust and mud, which damages the engine, from being sucked into the engine, and the engine 214 is disposed below the air filter 308. The housing 304 includes an air diverging pipe 312 and a fuel injection valve 314 that attached to the air diverging pipe 312. An open end 316 of the air diverging pipe 312 extend upwards to form a flange 318, while the other end 320 of the air diverging pipe 312 is connected to the engine 214. The air diverging pipe 312 directs air flow to the housing 304 and towards the engine 214. The fuel injection valve 314 receives fuel from the fuel tank 218 and injects the fuel to the air flow within the air diverging pipe 312.

According to this structure, the air diverging pipe (air inlet) 312 can be connected to the engine 214 without having substantially 90° curve. However, by providing such air inlet 312 and air box 306, the space for the fuel tank is being oppressed. As a result, problem such as the capacity of the fuel tank 218 cannot be sufficiently maintained occurs.

It is the objective of the present invention to provide a motorcycle having an increased engine output.

This objective is solved in an inventive manner by a motorcycle having a main frame and an engine, wherein the main frame is composed of a pair of left-right frame members, and wherein an air inlet extends in a space between the frame members and is connected to the engine in a substantially longitudinally extending line.

Thus, there is provided a motorcycle having, as far as possible, substantially straight air inlet, and also having a fuel tank with sufficient capacity.

Preferably, the motorcycle further comprises a fuel tank disposed in front of a seat and above the main frame, an air cleaner box disposed below the seat and behind a rear suspension, wherein the engine is provided below the main frame; and the air inlet extending from the air cleaner box is connected to the engine, and wherein when viewed from above the motorcycle, the air inlet extends and is connected to the engine in a straight line.

Further, preferably the pair of left-right frame members branch from a frame member that extends from a head pipe to the rear.

Still further, preferably the main frame is integrated with left-right bracket rear arms, wherein a cross tube is provided to connect the upper ends of the left-right bracket rear arms to each other, and wherein the cross tube is disposed behind and below a throttle body, which is connected to a part of the air inlet, and supports the upper end of the rear suspension.

Therein, it is further beneficial if a link mechanism is connected to the lower end of the rear suspension.

Yet further, preferably the engine is provided such that a cylinder within the engine is substantially vertical, and wherein an angle at which the air inlet is connected to the engine is between 30° and 60° inclusively, based on a direction in which the cylinder extends.

Even further, preferably the motorcycle has a specification of an off-road motorcycfe.

In the following, the present invention is explained in greater detail with respect to several embodiments thereof in conjunction with the accompanying drawings, wherein:
- FIG. 1: is a side view of a conventional motorcycle,
- FIG. 2: is a drawing illustrating the positions of parts within the space below a rear cross member of the motorcycle illustrated in FIG. 1,
- FIG. 3: is a plan view illustrating the relevant parts of the motorcycle illustrated in FIG. 1,
- FIG. 4: is a side view of a conventional motorcycle,
- FIG. 5: is a side view illustrating the relevant parts of the motorcycle illustrated in FIG. 1,
- FIG. 6: is a side view schematically illustrating the structure of an embodiment of the motorcycle 100,
- FIG. 7: is a plan view of the relevant parts of the motorcycle 100,
- FIG. 8: is a perspective view of the relevant parts of the motorcycle 100,
- FIG. 9: is a perspective view of the relevant parts of the motorcycle 100,
- FIG. 10: is a side view of the relevant parts of the motorcycle 100,
- FIG. 11: is a side view illustrating the structure of a bottom-link type link mechanism 95,
- FIG. 12: is a drawing illustrating an example of a cushion in a fully compressed state related to an embodiment,
- FIG. 13: is a drawing illustrating an example of a cushion in an uncompressed state related to an embodiment,
- FIG. 14: is a drawing depicting the change of position of a cushion between a fully compressed state and an uncompressed state, and
- FIG. 15: is a side view illustrating the structure of an engine 50 with a part being omitted.

The present embodiments described hereinafter are effective to easily improve gas emission performance and engine output, and to enable fuel tank having sufficient capacity to be mounted thereon.

Hereinafter, embodiments will be described with reference to the drawings.

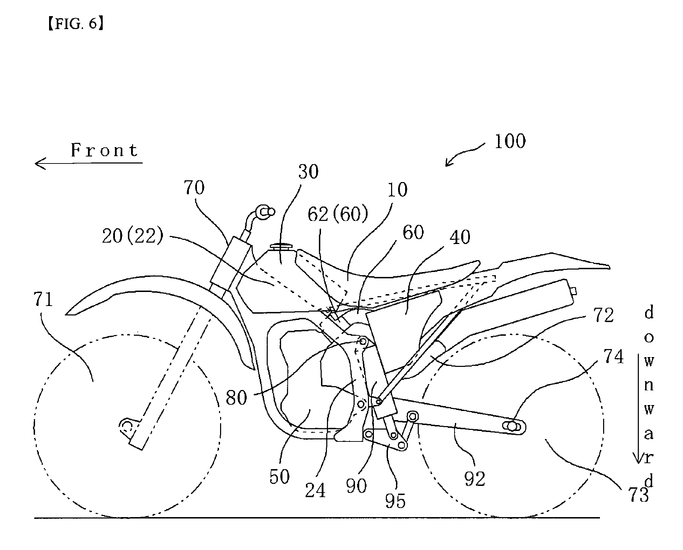

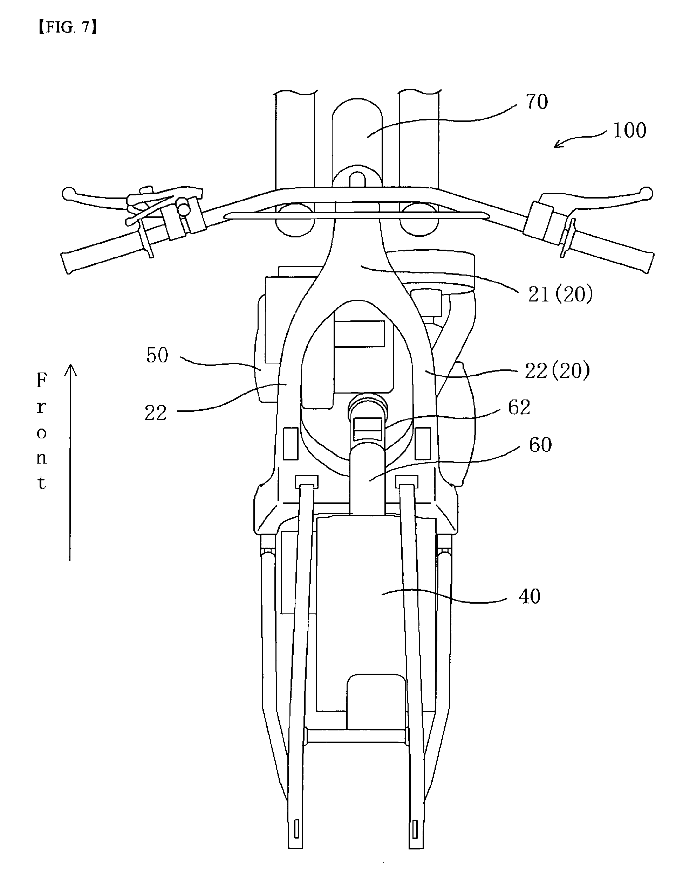

A motorcycle related to an embodiment will be described with reference to FIGS. 6 and 7. FIG. 6 is a side view schematically illustrating the structure of a motorcycle 100 in the present embodiment, and FIG. 7 is a plan view illustrating the relevant parts of the motorcycle 100. In FIG. 7, a fuel tank 30 and a seat 10 have been omitted so as to expose a main frame 20.

As illustrated in FIG. 6, the motorcycle 100 in the present embodiment includes the fuel tank 30, an air cleaner box 40, an engine 50 and an air inlet 60. The fuel tank 30 is disposed in front of the seat 10 and above the main frame 20; and the air cleaner box 40 is disposed below the seat 10 and behind a rear suspension (rear cushion) 90. The engine 50 is disposed below the main frame 20, and the air inlet 60 extends from the air cleaner box 40 to be connected with the engine 50. As illustrated in FIG. 7, the main frame 20 is composed of a pair of left-right frame members 22, and when viewed from above the motorcycle 100, the air inlet 60 extends and is connected to the engine 50 in a straight line.

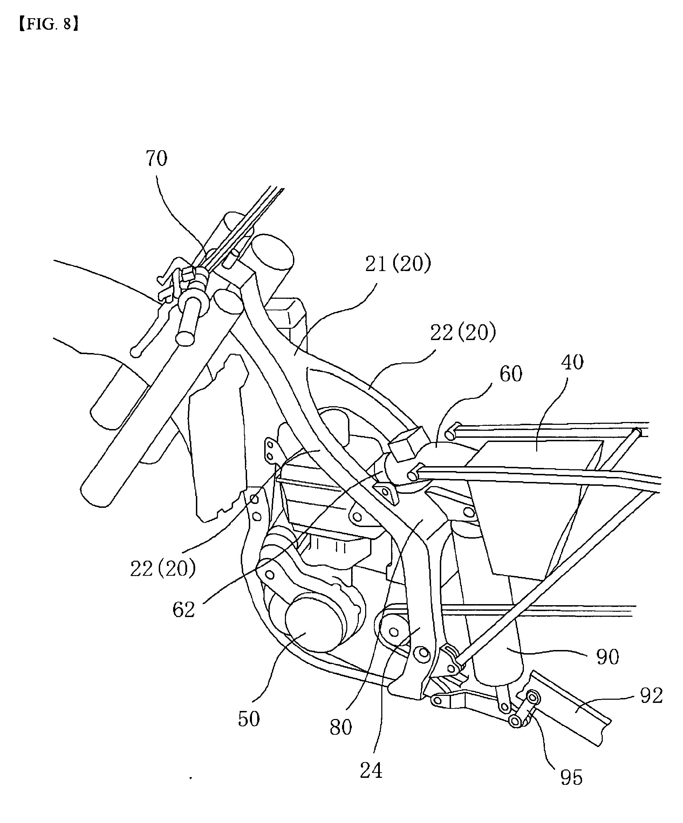

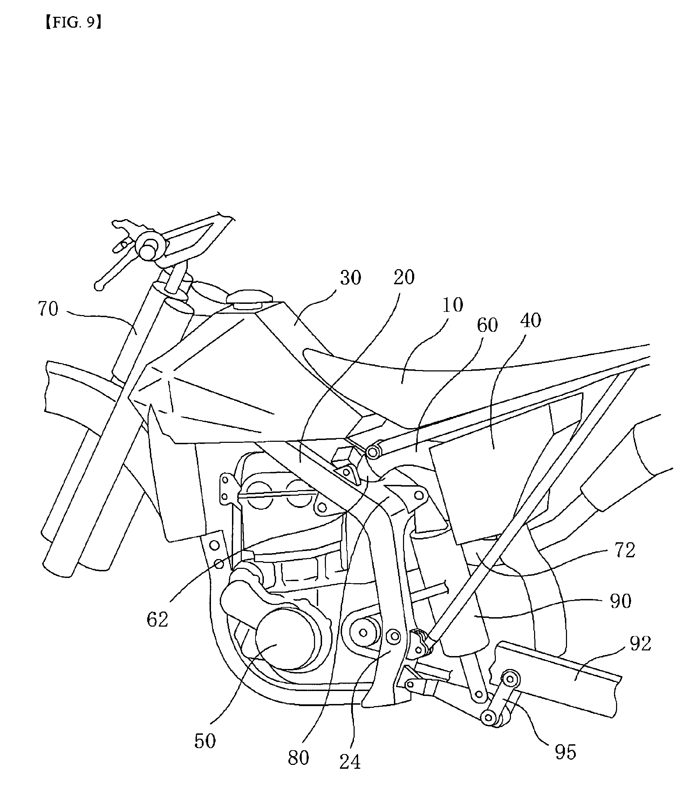

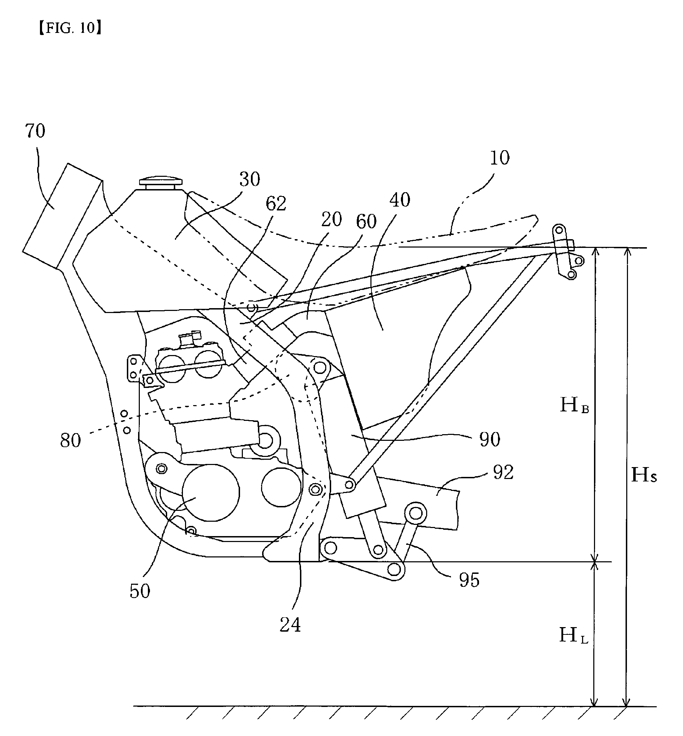

As a reference, a perspective view of the structure shown in FIG. 7 is illustrated in FIG. 8. The air cleaner box 40 has been omitted in both FIGS. 7 and 8 to provide a clearer view of the interior of the structure. A perspective view with the fuel tank 30 and the seat 10 being attached is illustrated in FIG. 9. FIG. 10 illustrates a side view of the relevant parts with the fuel tank 30 and the air cleaner box 40 being attached and the seat 10 being represented by dotted lines. In other words, to facilitate the understanding of the structure in the present embodiment, a perspective view of the structure shown in FIG. 7 is illustrated in FIG. 8. FIG. 9 is a perspective view of the structure illustrated in FIG. 8 with the fuel tank 30 and the seat 10 being mounted thereon, and FIG. 10 is a side view of the relevant parts with the fuel tank 30 being mounted on the structure illustrated in FIG. 8.

According to the motorcycle 100 in the present embodiment, the fuel tank 30 is disposed in front of the seat 10 and above the main frame 20, the air cleaner box 40 is disposed below the seat 10 and behind the rear suspension 90, the engine 50 is provided below the main frame 20, and the main frame 20 is composed of a pair of left-right frame members 22. When viewed from above the motorcycle 100, the air inlet 60 extends in a straight line from the cleaner box 40 to connect with the engine 50. Hence, the engine output can be easily increased and a fuel tank having sufficient capacity can also be mounted.

Therefore, by utilizing the space between the pair of left-right frame members 22, a suction pipe including a throttle body 62 can be connected smoothly to the air inlet 60, which is in turn connected to the engine 50. When viewed from above, since the throttle body 62 can be disposed in a straight line behind the engine 50 via the straight air inlet 60, the interior of the engine 50 is in symmetry and an even air mixture can be delivered. As a result, suction setting for cleaning the exhaust gas can be easily performed. Moreover, engine output can also be easily increased because of the straight (when viewed from above) air inlet 60.

Further, since the air cleaner box 40 is disposed below the seat 10 and behind the rear suspension 90, the space for the fuel tank 30 is not being suppressed by the air cleaner box 40, and thus the fuel tank 30 having sufficient capacity can be mounted.

According to the structure in the present embodiment, since the air inlet 60 is disposed above the rear suspension 90, a width corresponding to the width A in the structure illustrated in FIG. 2 can be reduced, and maneuverability improved. Also as differs from the structure illustrated in FIG. 2, since a structure (for example, see FIG. 9) in which the exhaust passage 72 is not disposed in the proximity of the rear suspension 90 can be easily adopted, the problem of the suspension being affected by the heat of the exhaust gas can be avoided. Moreover, by utilizing the technique in the present embodiment, the air inlet of the structure illustrated in FIG. 2 can also be substituted by an exhaust passage. Hence design that requires two exhaust passages or an increase in engine performance can also be easily achieved.

Here, the throttle body 62 is a carburetor of a fuel injection system. According to the motorcycle 100 in the present embodiment, instead of a regular carburetor, the throttle body 62 is being used as a carburetor, and the size of the carburetor can be reduced by using the throttle body 62. As a result, for example as illustrated in FIG. 10, the positions (and capacity) of the fuel tank 30 and the seat 10 (hence, the height Hₛ of the seat) can be maintained, while the position of a cross tube 80 can be located as high as possible under a certain limit. Accordingly, both the desire for reducing the height H_{B} in view of maneuverability and the desire for increasing the minimum height of H_{L} in view of off-road ridding can be satisfied. In the case of using the throttle body 62 instead of a carburetor, the reason why the size of a carburetor can be reduced even though the cross sectional surface area of the air inlet is the same is because a throttle body does not require a negative pressure diaphragm and a fuel reservoir, which are included in a carburetor.

The structure in the present embodiment will be further described hereinafter. For example, as illustrated in FIG. 7, the pair of left-right frame members 22 in the motorcycle 100 do not branch directly from a head pipe 70, but branch from a frame member 21 that extends towards the rear from the head pipe 70. The main frame 20 of the present invention can adopt a structure in which the pair of left-right frame members 22 branch directly from the head pipe 70 or a structure illustrated in FIG. 7. The following advantages can be achieved by adopting the structure in which the pair of left-right frame members 22 branch from the frame member 21 illustrated in FIG. 7.

In the case where the main frame 20 is made of only one frame member 21, since only one frame member passes through the center of the vehicle, although the rigidity of the vehicle is high, the front wheel 71 might feel wobbling when traveling off road. On the other hand, in the case where the main frame 20 is made of two left-right frame members 22 directly branched from the head pipe 70, under the same road condition, the wobbling feeling of the front wheel 71 can be eliminated but the rigidity of the vehicle will be relatively reduced. According to the structure in the present embodiment, since the front portion of the main frame 20 is made of one frame member 21 extending from the head pipe 70 and the rear portion of the main frame 20 is made of two left-right branching frame members 22, the advantage of eliminating the wobbling feeling of the front wheel 71 while maintaining the rigidity of the vehicle can be achieved.

Further, the main frame 20 is formed integrated with left-right bracket rear arms 24, and the upper end of the left-right bracket rear arms 24 are connected to each other via a cross tube 80 (see specifically FIGS. 8 and 9). The bracket rear arms 24 are a pair of left-right members that movably supported the front end of the rear arm 92, and connected to the rear end of the pair of left-right main frame 20. The bracket rear arms 24 are disposed such that it extends in an up-down direction behind the engine 50, and the rear end of the rear arm 92 supported by the bracket rear arms 24 is pivotally attached by the rear wheel (73). In the present embodiment, the bracket rear arms 24 are integrated with the main frame 20 by welding.

In the present embodiment, the cross tube 80 is disposed behind and below the throttle body 62, which is attached to a part of the air inlet 60, and supports the upper end of the rear suspension 90. According to this structure, even if the air inlet 60 passes above the rear suspension 90, the rear suspension 90 can be disposed at a relatively high position. Hence, a relatively long suspension can be used and the decrease in performance of the suspension can be prevented.

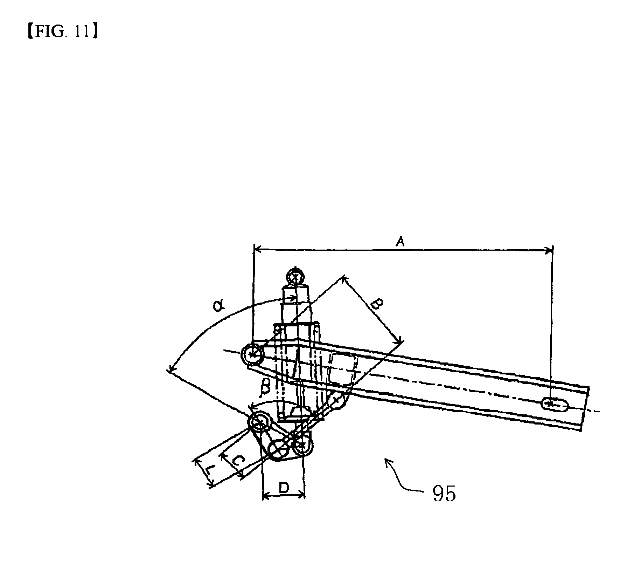

Further, since a link mechanism 95 is attached to the lower end of the rear suspension 90, the decrease in performance of the suspension can be prevented. The link mechanism 95 in the present embodiment is a bottom-link type link mechanism illustrated in FIG. 11. The bottom-link type link mechanism 95 enables the cushion to be lowered below the rare arm, and gets near the pivot. Hence the space below the seat 10 can be effectively utilized. Apart from the bottom-link type link mechanism 95, a pro-link types link mechanism or an on-off link types link mechanism can also be used.

Hereinafter, the setting of the level ratio of the bottom-link type link mechanism 95 will be briefly described. Since the level ratio is represented by R = (A/B) X (C/D), the level ratio increases when A or C increases, and decreases when B or D increases. If the length of the arm rely (L) is short, the variation of α and β increases, and the variation of the level ratio increases. The angle α between the cushion and the arm rely is typically 40° to 80°, and the angle β between the arm rely and the arm is typically 70° to 110°.

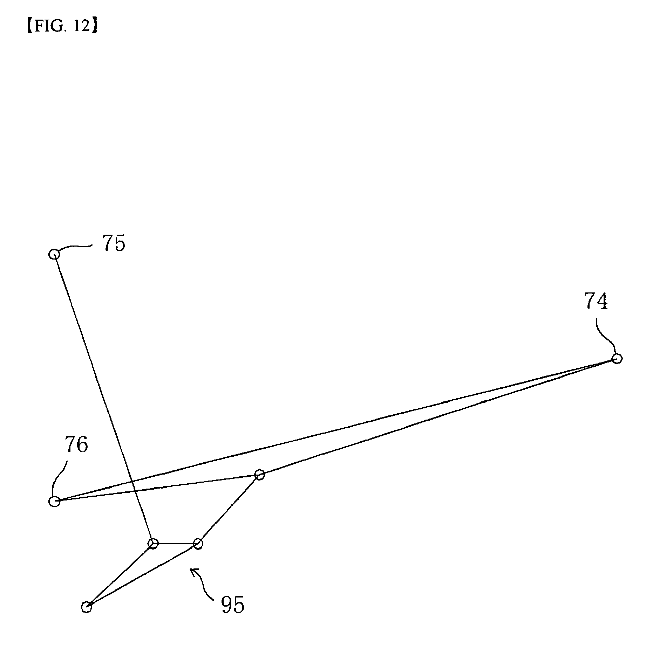

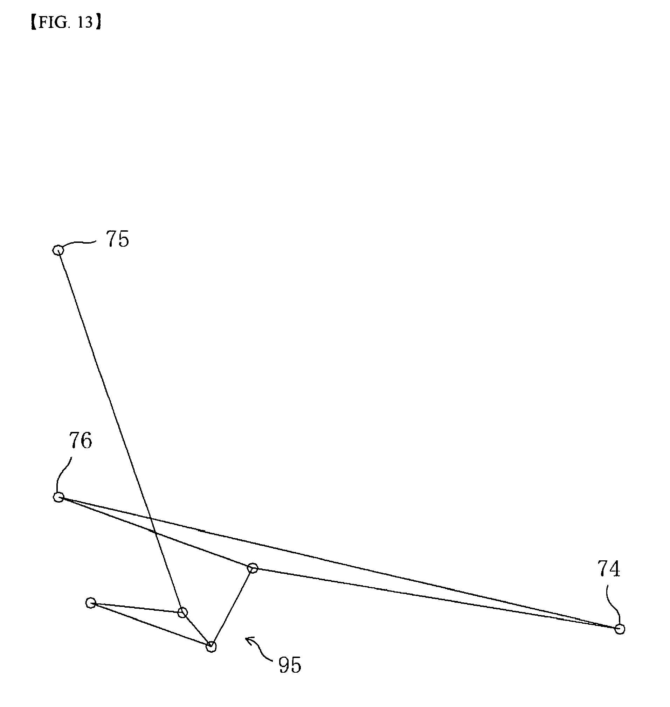

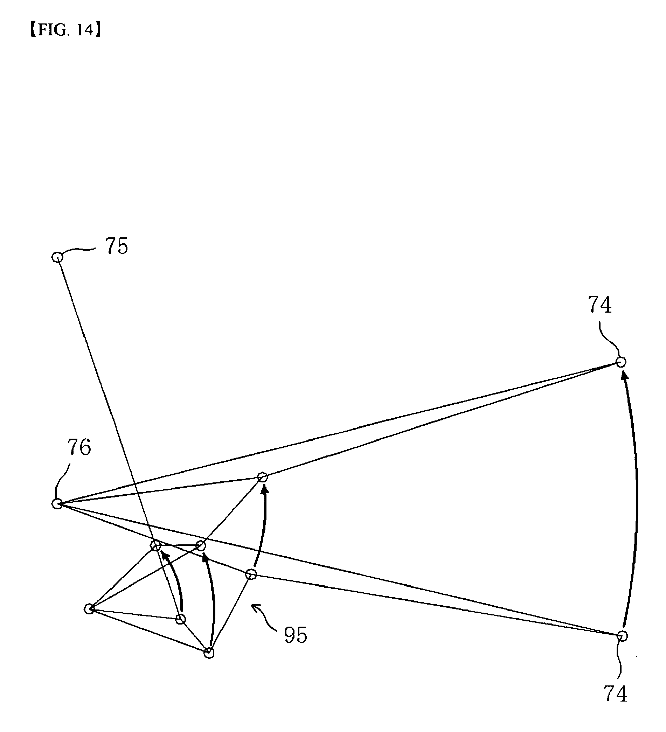

FIG. 12 is an example of the cushion in the present embodiment in a fully compressed state, and a wheel axle 74 of the rear wheel 73, an upper end 75 of the rear cushion 90, a pivot 76, and the link mechanism 95 are illustrated in the drawing. FIG. 13 is an example of the cushion in an uncompressed state. Hence as illustrated in FIG. 14, according to the example of the present embodiment, a large cushion performance indicated by the arrows can be achieved by the link mechanism.

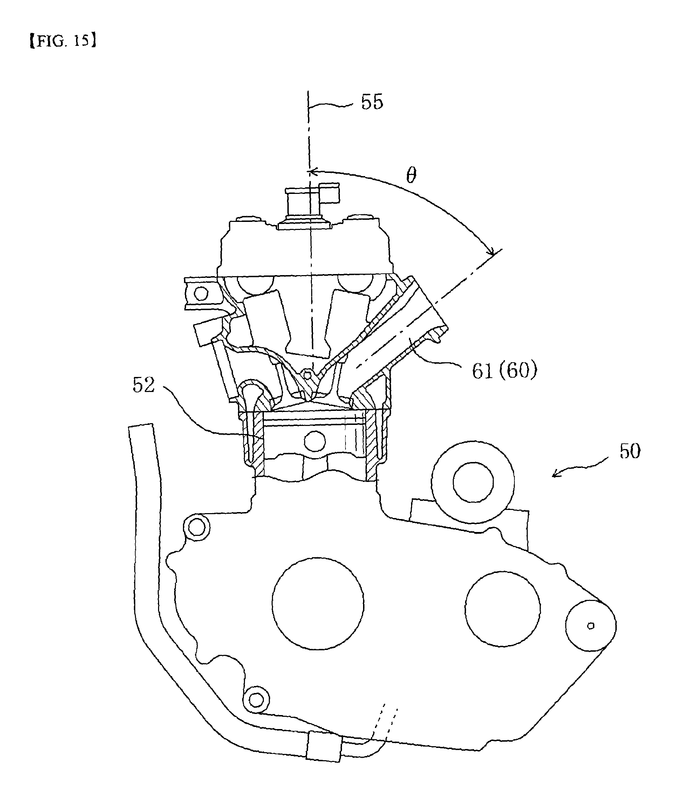

FIG. 15 is a side view of the upper portion of the engine 50 with a part being omitted. In the present embodiment, the engine 50 is disposed such that a cylinder 52 within the engine 50 is substantially vertical (for example, ±15□ from the vertical line). In view of an off-road vehicle with frequent front wheel traveling and an increased rear arm length, by mounting the engine 50 on the motorcycle 100 such that the extending direction 55 of the cylinder 52 is substantially vertical, the engine can be mounted at the front. Moreover, since the length of the engine in the front-rear direction can be reduced, the center of gravity of the engine itself can be adjusted to be close to the center of gravity of the entire vehicle. As a result, maneuverability can be improved by disposing heavy load (engine) near the center of gravity.

As illustrated in FIG. 15, the angle θ at which the air inlet 60 (here, a suction port 61 directly connected to the engine) is connected to the engine 50 is based on the extending direction 55 of the cylinder 52, for example within 60° (typically between 30° and 60°). The angle θ illustrated in the drawing is 52°. According to the structure of the present embodiment and as illustrated in FIG. 15, the straight and oblique (therefore not perpendicular) suction port 61 is provided instead of an approximately perpendicularly curved suction port. A structure that enables easy increase of engine output can be achieved by avoiding such curving portion.

According to the motorcycle 100 in the present embodiment, since the straight air inlet 60 including the throttle body 62 can be connected to the engine 50, an even air mixture can be delivered within the symmetrical engine 50 (cylinder 52) as compared to the structure illustrated in FIG. 3 in which uneven air mixture tends to be delivered. As a result, suction setting for cleaning the exhaust gas can be easily performed, and engine output easily increased.

In addition, since the air cleaner box 40 is disposed below the seat 10 and behind the rear suspension 90, the air cleaner box 40 does not oppress the space for the fuel tank 30. As a result, a fuel tank having sufficient capacity can be mounted and problems encountered when using the structure illustrated in FIG. 5 can also be prevented.

Off-road bike is mainly used as an example in the present embodiment. However, the term "motorcycle" in the present specification includes motorbike and scooter, specifically, vehicle that can be turned by tilting the vehicle body. Hence the term "motorcycle" can also includes vehicles of which at least the front or the rear has two or more wheels; or in view of the number of tires, three-wheels vehicle, four-wheels vehicle (or more wheels vehicle). In addition, without limiting to motorcycle, the present teaching is also applicable to other vehicles that can utilize the effect of the present invention, for example, apart from motorcycle, the so called saddle ridding vehicles (snowmobile, ATV: all terrain vehicle, etc.).

According to the present teaching, a motorcycle having a fuel tank with sufficient capacity mounted thereon and, as far as possible, a straight air inlet, can be provided.

The description above discloses (amongst others) an embodiment of a motorcycle of the present embodiment including a fuel tank disposed in front of a seat and above a main frame, an air cleaner box disposed below the seat and behind a rear suspension, an engine provided below the main frame; and an air inlet extending from the air cleaner box and is connected to the engine, the main frame is composed of a pair of left-right frame members, and when viewed from above the motorcycle, the air inlet extends and is connected to the engine in a straight line.

According to this embodiment of the motorcycle, since the fuel tank is disposed in front of the seat and above the main frame, the air cleaner box is disposed below the seat and behind the rear suspension, the engine is provided below the main frame, the main frame is composed of a pair of left-right frame members, and the air inlet extends from the air cleaner box and is connected to the engine in a straight line, the engine output can be readily increased and a fuel tank having sufficient capacity can be mounted.

By utilizing the space between the pair of left-right frame members, an air inlet including a throttle body can be provided such that it smoothly connects to the engine, and when viewed from above, a carburetor (throttle body) can be provided behind the engine in a straight line via the straight air inlet. As a result, the interior of the engine is in symmetry and an even air mixture can be delivered, and suction setting for cleaning the exhaust gas can be easily performed. In addition, by utilizing the straight air inlet, when viewed from above, the engine output can also be easily increased. Since the air cleaner box is disposed below the seat and behind the rear suspension, the air cleaner box does not oppress the space for the fuel tank, and thus a fuel tank having sufficient capacity can be mounted.

In one of the preferred embodiments, the pair of left-right frame members branch from a frame member that extends from a head pipe to the rear.

in one of the preferred embodiments, the main frame is integrated with left-right bracket rear arms, a cross tube is provided to connect the upper ends of the left-right bracket rear arms to each other, and the cross tube is disposed behind and below a throttle body, which is connected to a part of the air inlet, and supports the upper end of the rear suspension.

It is desirable that a link mechanism is connected to the lower end of the rear suspension.

In one of the preferred embodiments, the engine is provided such that a cylinder within the engine is substantially vertical, and an angle at which the air inlet is connected to the engine is between 30° and 60° inclusively, based on a direction in which the cylinder extends.

In one of the preferred embodiments, the motorcycle has a specification of an off-road motorcycle.

The description above discloses, as a particularly preferred embodiment, in order to provide a motorcycle on which a fuel tank with sufficient capacity is mounted and; as far as possible, having a straight air inlet, a motorcycle 100 including fuel tank 30 disposed in front of seat 10 and above main frame 20, air cleaner box 40 disposed below seat 10 and behind rear suspension 90, engine 50 provided below main frame 20, and air inlet 60 extending from air cleaner box 40 and is connected to engine 50. Main frame 20 is composed of a pair of left-right frame members 22, and when viewed from above motorcycle 100, air inlet 60 extends and is connected to engine 50 in a straight line.

## Claims

1. Motorcycle having a main frame (20) and an engine (50), wherein the main frame (20) is composed of a pair of left-right frame members (22), and wherein an air inlet (60) extends in a space between the frame members (22) and is connected to the engine (50) in a substantially longitudinally extending line.

2. Motorcycle according to claim 1, further comprising a fuel tank (30) disposed in front of a seat (10) and above the main frame (20), an air cleaner box (40) disposed below the seat (10) and behind a rear suspension (90), wherein the engine (50) is provided below the main frame; and the air inlet (60) extending from the air cleaner box (40) is connected to the engine (50), and wherein when viewed from above the motorcycle, the air inlet (60) extends and is connected to the engine (50) in a straight line.

3. Motorcycle according to claim 1 or 2, wherein the pair of left-right frame members (22) branch from a frame member (21) that extends from a head pipe to the rear.

4. Motorcycle according to one of the claims 1 to 3, wherein the main frame (20) is integrated with left-right bracket rear arms (22), wherein a cross tube (80) is provided to connect the upper ends of the left-right bracket rear arms (22) to each other, and wherein the cross tube (80) is disposed behind and below a throttle body (62), which is connected to a part of the air inlet (60), and supports the upper end of the rear suspension (90).

5. Motorcycle according to claim 4, wherein a link mechanism (95) is connected to the lower end of the rear suspension (90).

6. Motorcycle according to one of the claims 1 to 5, wherein the engine (50) is provided such that a cylinder within the engine (50) is substantially vertical, and wherein an angle at which the air inlet (60) is connected to the engine (50) is between 30° and 60° inclusively, based on a direction in which the cylinder extends.

7. Motorcycle according to one of the claims 1 to 6, wherein the motorcycle has a specification of an off-road motorcycle.
